(19) Europäisches Patentamt
European Patent Office
Office européen des brevets

(11) EP 4 778 771 A1

(12) EUROPEAN PATENT APPLICATION
published in accordance with Art. 153(4) EPC

(43) Date of publication:
22.07.2026 Bulletin 2026/30

(51) International Patent Classification (IPC):
B60L 15/20 (2006.01)    B60L 9/18 (2006.01)

(21) Application number: 24865089.7

(22) Date of filing: 26.07.2024

(52) Cooperative Patent Classification (CPC):
B60L 9/18; B60L 15/20

(86) International application number:
PCT/JP2024/026848

(87) International publication number:
WO 2025/057582 (20.03.2025 Gazette 2025/12)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 15.09.2023 JP 2023149678

(71) Applicant: Mitsubishi Jidosha Kogyo Kabushiki
Kaisha
Tokyo 108-8410 (JP)

(72) Inventors:
• ISHIHARA, Yuji
  Tokyo 108-8410 (JP)
• TAKAHASHI, Naoki
  Tokyo 108-8410 (JP)
• TAKAHASHI, Ryota
  Tokyo 108-8410 (JP)
• OKAMURA, Yutaro
  Tokyo 108-8410 (JP)

(74) Representative: Vossius & Partner
Patentanwälte Rechtsanwälte mbB
Siebertstraße 3
81675 München (DE)

(54) VEHICLE CONTROL DEVICE AND VEHICLE CONTROL METHOD

(57) A vehicle control device of the disclosure is a vehicle control device (10) including a plant model (M1, M2) including a driving side inertia moment ($J_{SM}$, $J_{DM}$) and a load side inertia moment ($J_{SL}$, $J_{DL}$) calculated based on an inertia moment ($J_M$) of a drive source of a vehicle (1), the vehicle control device (10) including a calculation unit (11) and a control unit (12). The calculation unit (11) calculates an estimated wheel speed ($\omega_{LE}$, $\omega_{RE}$) based on the plant model (M1, M2) and a drive source angular velocity ($\omega_{LM}$, $\omega_{RM}$). The control unit (12) performs driving force control of the vehicle (1), using the estimated wheel speed ($\omega_{LE}$, $\omega_{RE}$).

Fig. 1

**Description**

[Technical Field]

The present disclosure relates to a vehicle control device and a vehicle control method related to driving force control of a vehicle.

[Background Art]

One of the conventionally-known driving force control of a vehicle including a drive source sets a target torque of the drive source based on various types of information and controls an operation state of the drive source such that the target torque can be obtained. The target torque is set based on, for example, an accelerator opening degree and a vehicle speed calculated from an actual wheel speed. A technique for estimating, from a transfer function, a drive source angular velocity (for example, a motor angular velocity) when causing a drive source (for example, a motor) to generate a target torque and controlling a torque command value so as to obtain a desired rotation state has been known (see PTL 1).

[Citation List]

[Patent Literature]

[PTL 1]
JP 2019-103249 A

[Summary of Invention]

[Technical Problem]

Information of an actual wheel speed detected by a wheel speed sensor is transmitted to a vehicle control device via an in-vehicle communication network. For this reason, a slight time lag occurs until the vehicle control device grasps an actual vehicle behavior, and controllability of a drive source may be deteriorated. As a solution to the above, it is conceivable that a vehicle behavior can be ascertained substantially in real time by using, instead of the actual wheel speed, information of a drive source angular velocity detected by sensors (for example, resolvers) directly connected to a vehicle control device.
However, the drive source angular velocity does not always coincide with the actual wheel speed (the actual angular velocity of the drive wheel), and includes, for example, more vibration components than the actual wheel speed. For the above, if the drive source angular velocity is directly reflected in driving force control, there is a concern that malfunction may occur due to the influence of the vibration components. There is a further concern that the operation state of the drive source may become unstable due to the vibration of a controlled variable (for example, a motor torque and a motor angular velocity). Such inconvenience may occur irrespective of the type of drive source (for example, a motor, and an internal combustion engine).
The present disclosure has been devised in view of such a problem and one of objects thereof is to provide a vehicle control device and a vehicle control method aiming at enhancing responsiveness and stability of driving force control. The object of the present disclosure should not be limited to this object and another object of the present disclosure is to achieve actions and effects which are derived from each configuration described in the following "Description of Embodiments" and which conventional techniques do not attain.

[Solution to Problem]

The disclosed invention can be embodied in the following aspects (application examples) and solves at least a part of the above problem. The aspects of aspect 2 and thereafter are each optionally and appropriately selected and can be omitted. This means that the aspects of aspect 2 and thereafter do not disclose an essential aspect or configuration.
Aspect 1. The disclosed vehicle control device a vehicle control device including a plant model including a driving side inertia moment and a load side inertia moment calculated based on an inertia moment of a drive source of a vehicle. The vehicle control device includes a calculation unit that calculates an estimated wheel speed based on the plant model and a drive source angular velocity, and a control unit that performs driving force control of the vehicle, using the estimated wheel speed.
Aspect 2. In an aspect containing the above-described aspect 1, it is preferable that the calculation unit includes a transfer function expressing input and output characteristics of a two-inertia system including the load side inertia moment, a spring damper designed with a rigidity and a viscosity, and the driving side inertia moment.

Aspect 3. In an aspect containing the above-described aspect 2, it is preferable that the load side inertia moment is variably set based on an actual slip ratio.

Aspect 4. In an aspect containing the above-described aspect 3, it is preferable that the actual slip ratio is calculated based on an actual wheel speed or the estimated wheel speed and a vehicle body speed of the vehicle.

Aspect 5. In an aspect containing the above-described aspect 3, it is preferable that the actual slip ratio is changed depending on an execution state of the driving force control.

Aspect 6. In an aspect containing any one of the above-described aspects 3 to 5, it is preferable that the calculation unit calculates the load side inertia moment and the actual slip ratio by using a sum model, which is obtained by modeling motion states of a left drive system and a right drive system during straight traveling of the vehicle, and a difference model, which is obtained by modeling motion states of the left drive system and the right drive system during turning of the vehicle.

Aspect 7. The disclosed vehicle control method of the disclosure is a vehicle control method using a plant model including a driving side inertia moment and a load side inertia moment calculated based on an inertia moment of a drive source of a vehicle. The vehicle control method includes calculating an estimated wheel speed based on the plant model and a drive source angular velocity, and performing driving force control of the vehicle, using the estimated wheel speed.

[Advantageous Effects of Invention]

According to the disclosed vehicle control device and vehicle control method, an estimated wheel speed is calculated based on a plant model and a drive source angular velocity, and driving force control is performed using the estimated wheel speed, so that a time lag for ascertaining a vehicle behavior can be reduced as compared with a case where driving force control is performed using an actual wheel speed. As compared with a case where driving force control is performed using an unmodified drive source angular velocity, it is possible to suppress the occurrence of malfunction and destabilization of the operation state of a motor. Consequently, controllability and stability of driving force control can be enhanced.

[Brief Description of Drawings]

[Fig. 1]

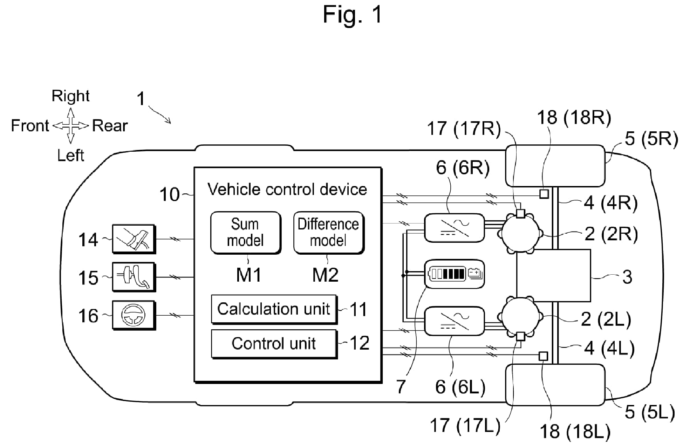

Fig. 1 is a block diagram of a vehicle to which a vehicle control device is applied.
[Fig. 2]

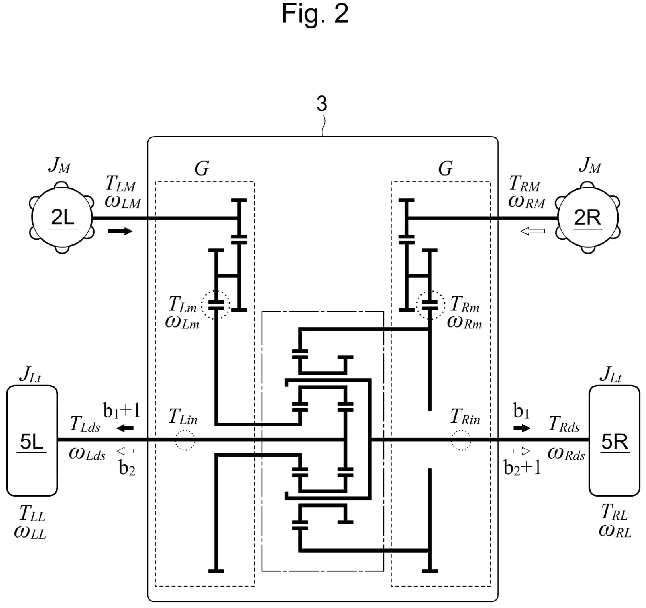

Fig. 2 is a schematic view illustrating an example of a structure of a drive system of a vehicle.
[Fig. 3]

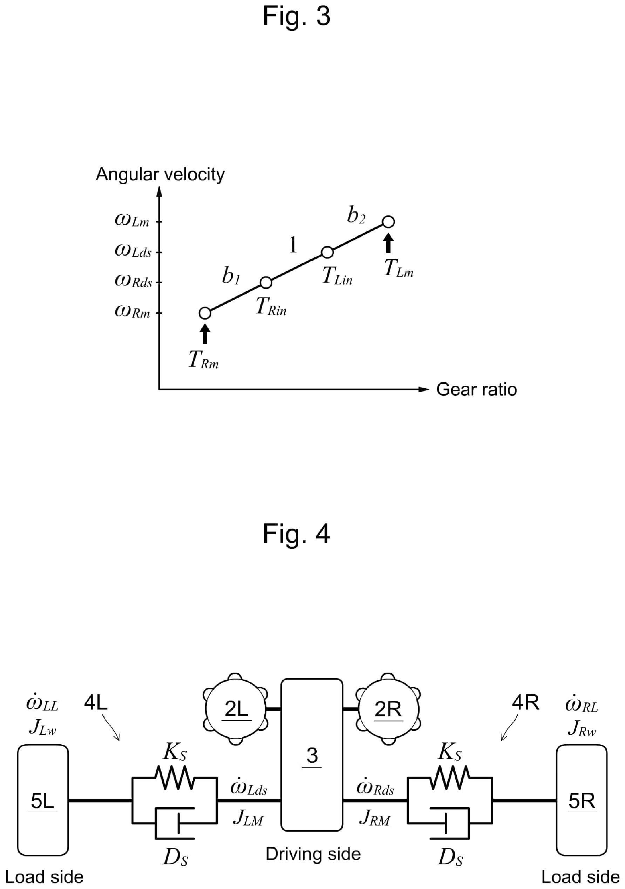

Fig. 3 is a speed diagram of a power distribution mechanism of a vehicle having the structure of Fig. 2.
[Fig. 4]
Fig. 4 is a schematic diagram illustrating configurations of a left drive system and a right drive system of a vehicle.
[Fig. 5]

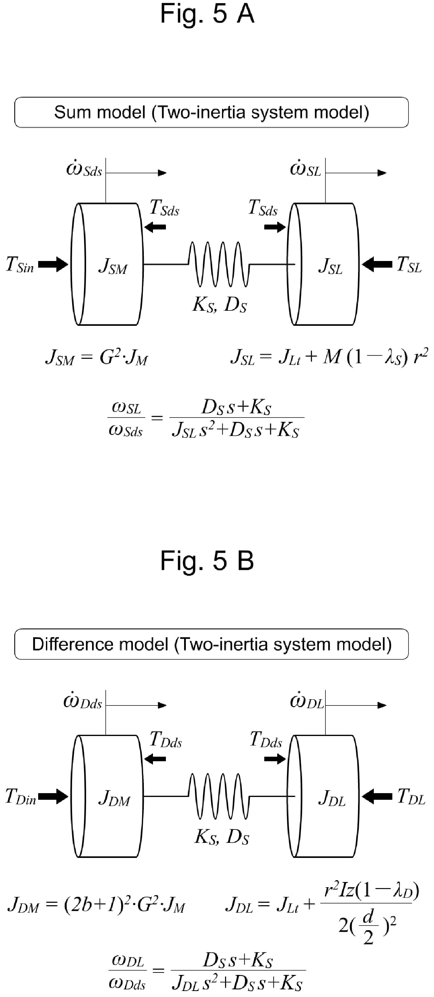

Fig. 5A is a schematic diagram of a sum model M1, and Fig. 5B is a schematic diagram of a difference model M2.
[Fig. 6]

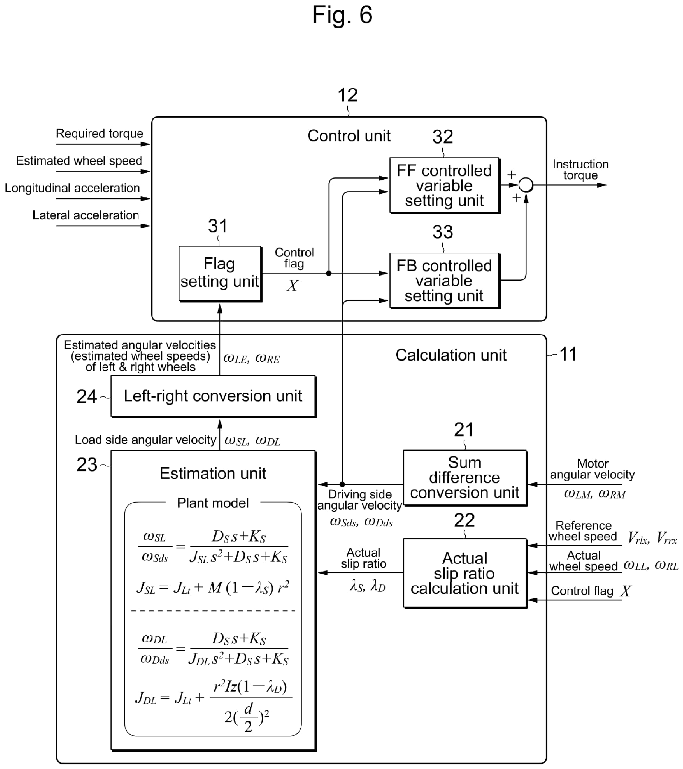

Fig. 6 is a block diagram illustrating an example of control contents of a calculation unit and a control unit of Fig. 1.
[Fig. 7]

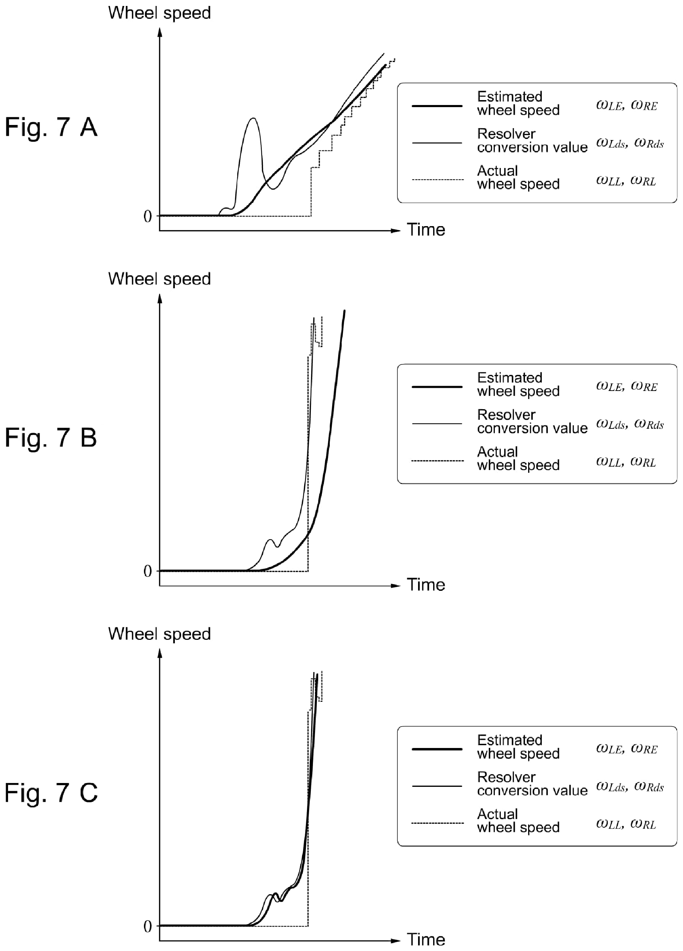

Figs. 7A to 7C are graphs showing simulation results obtained by examining a relationship among an estimated wheel speed, a resolver conversion value, and an actual wheel speed.

[Description of Embodiments]

The type of vehicle in which the disclosed vehicle control device and vehicle control method are used is, for example, an engine vehicle (gasoline automobile, diesel automobile), an electric vehicle, or a hybrid vehicle. The disclosed embodiment is a vehicle including a mechanism capable of adjusting driving forces of at least a left wheel and a right wheel (in other words, the left and right wheels, that is, left and right drive wheels), and the types and number of drive sources (internal combustion engine, motor, and the like) are not limited.

The disclosed embodiment is applied to an automobile that travels by driving left and right wheels (left and right drive wheels) preferably using multiple drive sources. Here, one of the multiple drive sources is referred to as a left drive source, and one of the other drive sources is referred to as a right drive source. One of the left and right wheels located on the left side of the vehicle is referred to as a left wheel, and the other is referred to as a right wheel. The disclosed vehicle control device and vehicle control method can be used to control a vehicle including a left drive system including a left axle and a left wheel to which power from a left drive source is transmitted, and a right drive system including a right axle and a right wheel to which power from a right drive source is transmitted.

The layout of each of the left drive source and the right drive source may or may not be set to correspond to the left-right direction determined based on a traveling direction of the vehicle. In addition, the left drive system and the right drive system may operate independently of each other, or may be connected to each other via a transmission mechanism or a power distribution mechanism. The disclosed vehicle control device and vehicle control method can be utilized for control of an in-wheel motor vehicle in which each of the left and right wheels is driven by an individual motor, and can also be utilized for control of a torque vectoring vehicle in which the left and right wheels can transmit a driving force and a torque to each other.

1. Configuration

A vehicle control device 10 according to an embodiment is mounted on a vehicle 1 illustrated in Fig. 1. The vehicle 1 includes left and right wheels 5 (wheels) disposed lined up in the vehicle width direction, a power distribution mechanism 3 (differential mechanism) that applies a torque difference to the left and right wheels 5, and a pair of motors 2 connected to the power distribution mechanism 3. In the drawing of the embodiment, alphabets L and R attached to numerical symbols represent arrangement positions of elements represented by the respective symbols (on the left side or the right side of the vehicle 1). For example, the symbol 5L represents one (left wheel) of the left and right wheels 5 located on the left side of the vehicle 1, and the symbol 5R represents the other (right wheel) located on the right side. The positions of the left and right wheels 5 in the front-rear direction are not limited, and may be the front wheels or the rear wheels of the vehicle 1.

The motor 2 (drive source) has a function of driving at least either of the front wheels or the rear wheels of the vehicle 1, and can have a function of driving all the four wheels. One of the pair of motors 2 which is disposed on the left side is a left motor 2L (left drive source), and the other disposed on the right side is a right motor 2R (right drive source). The left motor 2L and the right motor 2R operate independently of each other, and can individually output driving forces of different magnitudes. These motors 2 are connected to the power distribution mechanism 3 via a pair of speed reduction mechanisms provided separately from each other.

The vehicle 1 includes the power distribution mechanism 3 that amplifies a torque difference between the pair of motors 2 and distributes the torque to the left and right wheels 5. The power distribution mechanism 3 of the present embodiment is a differential mechanism having a yaw control function (Active Yaw Control (AYC) function), and is interposed between an axle 4 (left axle 4L) connected to the left wheel 5L and an axle 4 (right axle 4R) connected to the right wheel 5R. The yaw control function is a function of adjusting the yaw moment by actively controlling a sharing ratio of the driving forces (driving torque) of the left and right wheels 5 and stabilizing the posture of the vehicle 1. A planetary gear mechanism, a differential gear mechanism, and the like are incorporated in the power distribution mechanism 3. A vehicle drive device including the pair of motors 2 and the power distribution mechanism 3 is also referred to as a Dual Motor AYC (DM-AYC) device.

As illustrated in Fig. 2, the power distribution mechanism 3 includes a pair of speed reduction mechanisms (gear trains surrounded by broken lines in Fig. 2) that reduce the rotational speed of the motors 2, and a transmission mechanism (gear trains surrounded by an alternating dotted-dashed line in Fig. 2). The speed reduction mechanisms are each a mechanism that increases a torque by decelerating the speed of motor torque (driving force) output from the motor 2. A reduction ratio G of the speed reduction mechanism is appropriately set in accordance with the output characteristics and performance of the motor 2. If the torque performance of the motor 2 is sufficiently high, the speed reduction mechanism may be omitted. The transmission mechanism is a mechanism that amplifies a torque difference to be transmitted to each of the left and right wheels 5.

The transmission mechanism of the power distribution mechanism 3 illustrated in Fig. 2 includes a pair of planetary gear mechanisms. These planetary gear mechanisms have a structure in which planetary gears provided in respective carriers and rotation axes thereof are connected to each other. Each carrier rotatably supports the planetary gear and supports the planetary gear to revolve around a sun gear. Driving forces transmitted from the left and right motors 2 are input to a ring gear and a sun gear of one planetary gear mechanism. The driving forces to be transmitted to the left and right wheels 5 are extracted from a sun gear and a carrier of the other planetary gear mechanism. The structure of the power distribution mechanism 3 illustrated in Fig. 2 is merely an example for implementing the yaw control function, and other known structures can be used.

In Fig. 2, $J_M$ represents a motor inertia moment (the moment of inertia of the motor 2), and $J_{Lt}$ represents a tire inertia moment of the left and right wheels 5 (the moment of inertia of the left and right wheels 5). Regarding the parameters of the left drive system, $T_{LM}$ is a left motor input torque (left motor instruction torque), $T_{Lm}$ is a left motor input torque after deceleration by a reduction mechanism, $\omega_{LM}$ is a left motor angular velocity, $\omega_{Lm}$ is a left motor angular velocity after deceleration by the reduction mechanism, $T_{Lin}$ is a left driving side torque, $T_{Lds}$ is a left axle torque, $T_{LL}$ is a left wheel load side torque, $\omega_{Lds}$ is a left driving side angular velocity, and $\omega_{LL}$ is a left wheel angular velocity. Similarly, regarding the parameters of the right drive system, $T_{RM}$ is a right motor input torque (right motor instruction torque), $T_{Rm}$ is a right motor input torque after deceleration by the reduction mechanism, $\omega_{RM}$ is a right motor angular velocity, $\omega_{Rm}$ is a right motor angular velocity after deceleration by the reduction mechanism, $T_{Rin}$ is a right driving side torque, $T_{Rds}$ is a right axle torque, $T_{RL}$ is a right wheel load side torque, $\omega_{Rds}$ is a right driving side angular velocity, and $\omega_{RL}$ is a right wheel angular velocity.

Fig. 3 is a speed diagram of the power distribution mechanism 3. In Figs. 2 and 3, $b_1$ and $b_2$ represent torque difference amplification factors (deceleration rate, differential deceleration ratio) determined in accordance with the structure of the gears incorporated in the power distribution mechanism 3. The torque difference amplification factor related to the power transmission from the left motor 2L to the right wheel 5R is $b_1$, and a torque difference amplification factor related to the power transmission from the left motor 2L to the left wheel 5L is $b_1+1$. The torque difference amplification factor related to the power transmission from the right motor 2R to the left wheel 5L is $b_2$, and a torque difference amplification factor related to the power transmission from the right motor 2R to the right wheel 5R is $b_2+1$.

As illustrated in Fig. 1, each of the pair of motors 2 is electrically connected to a battery 7 via an inverter 6 (6L, 6R). The inverter 6 is a conversion device (DC-AC inverter) that mutually converts power (DC power) of a DC circuit on the battery 7 side and power (AC power) of an AC circuit on the motor 2 side. The battery 7 is, for example, a lithium ion secondary battery or a nickel-metal hydride secondary battery, and is a secondary battery capable of supplying a high voltage direct current of several hundred volts. During power running of the motor 2, the DC power is converted into AC power by the inverter 6 and the converted AC power is supplied to the motor 2. During power generation by the motor 2, the generated power is converted into DC power by the inverter 6 and the converted DC power is charged in the battery 7. The operating state of the inverter 6 is controlled by the vehicle control device 10.

The vehicle control device 10 is one of electronic control devices (ECU, Electronic Control Unit) mounted on the vehicle 1. The vehicle control device 10 has a function of controlling output of each of the left motor 2L and the right motor 2R in the vehicle 1 including the left drive system including the left axle 4L and the left wheel 5L to which power from the left motor 2L (left drive source) is transmitted and the right drive system including the right axle 4R and the right wheel 5R to which power from the right motor 2R (right drive source) is transmitted.

The vehicle control device 10 incorporates a processor (central processing unit), a memory (main memory), a storage device (storage), an interface device, and the like (not illustrated), which are communicably connected to each other via an internal bus. The contents of determination and control performed by the vehicle control device 10 are recorded and saved, as firmware or an application program, in the memory and when the program is executed, the contents of the program are expanded in a memory space and executed by the processor.

To the vehicle control device 10, an accelerator opening sensor 14, a brake sensor 15, a steering angle sensor 16, a resolver 17, and a wheel speed sensor 18 are connected. The accelerator opening sensor 14 is a sensor that detects a depression amount (accelerator opening degree) of an accelerator pedal and a depression speed thereof. The brake sensor 15 is a sensor that detects a depression amount (brake pedal stroke) of a brake pedal and a depression speed thereof. The steering angle sensor 16 is a sensor that detects steering angle (actual tire-turning angles or a rotation angle of a steering wheel) of the left and right wheels 5.

The resolvers 17 (17L, 17R) are sensors that detect the speeds of the motors 2, and provided one for each of the pair of motors 2. The resolvers 17 output information of rotation angles (driving force angular velocities, motor angular velocities $\omega_{LM}$ and $\omega_{RM}$) of the motor 2 in the form of two-phase AC voltages. The speed of each motor 2 is grasped from changes in the AC voltage over time. The wheel speed sensors 18 (18L, 18R) are sensors that detect the speeds (actual wheel speeds $\omega_{LL}$ or $\omega_{RL}$) of the axles 4. The vehicle control device 10 controls the output of the pair of motors 2 (2L, 2R) by controlling the operating state of the inverters 6 (6L, 6R) on the basis of pieces of information detected by the various sensors 14 to 18 mentioned above. Instead of the resolvers 17, another sensor (hall sensor, encoder, or the like) having a different internal structure and operation principle may be used.

2. Vehicle control device

As illustrated in Fig. 1, the vehicle control device 10 includes a sum model M1, a difference model M2, a calculation unit 11, and a control unit 12 as elements for controlling the driving forces of the left drive system and the right drive system. These elements are illustrated by classifying the functions of the vehicle control device 10 for convenience. These elements may be described as independent programs for implementing the functions of the respective elements. Alternatively, multiple elements may be merged and described as one composite program.

The sum model M1 is one of plant models obtained by modeling motion states of the left drive system (a power transmission path from the left motor 2L to the left wheel 5L) and the right drive system (a power transmission path from the right motor 2R to the right wheel 5R) when the vehicle 1 travels straight, in order to grasp the motion states. A parameter input to the sum model M1 corresponds to the sum of a parameter input to the left drive system and a parameter input to the right drive system, and is referred to as a "sum model state quantity". The difference model M2 is one of plant models obtained by modeling the motion states of the left drive system and the right drive system when the vehicle 1 is turning, in order to grasp the motion states. A parameter input to the difference model M2 corresponds to a difference between the parameter input to the left drive system and the parameter input to the right drive system, and is referred to as a "difference model state quantity".

Fig. 4 is a schematic diagram illustrating the structures of the left drive system and the right drive system of the vehicle 1. Each of the left axle 4L and the right axle 4R can correspond to a structure in which a spring (axle rigidity $K_S$) and a damper (axle viscosity $D_S$) are connected in parallel. In Fig. 4, $J_{LM}$ is an inertia moment on the power distribution mechanism 3 side (driving side) with respect to the left axle 4L, $J_{Lw}$ is an inertia moment on the left wheel 5L side (load side) with respect to the left axle 4L, $J_{RM}$ is an inertia moment on the power distribution mechanism 3 side (driving side) with respect to the right axle 4R, and $J_{Rw}$ is an inertia moment on the right wheel 5R side (load side) with respect to the right axle 4R. Fig. 4 also illustrates a differential value (left driving side angular acceleration) of a left driving side angular velocity $\omega_{Lds}$, a differential value (left wheel angular acceleration) of a left wheel angular velocity $\omega_{LL}$, a differential value (right driving side angular acceleration) of a right driving side angular velocity $\omega_{Rds}$, and a differential value (right wheel angular acceleration) of a right wheel angular velocity $\omega_{RL}$.

On the basis of the above schematic diagram, the configuration of the sum model M1 can be modeled as a configuration as illustrated in Fig. 5A, and the configuration of the difference model M2 can be modeled as a configuration as illustrated in Fig. 5B. The sum model M1 is suitable for use in damping control and slip control for the axle 4 and the left and right wheels 5 related to straight traveling of the vehicle 1, and the difference model M2 is suitable for use in damping control and slip control for the axle 4 and the left and right wheels 5 related to turning of the vehicle 1. In the present embodiment, both the sum model M1 and the difference model M2 are two-inertia system models, but each of the models may be configured as a multi-inertia system model including three or more inertia moments and spring dampers. The sum model M1 and the difference model M2 may be models having no spring damper, and may be plant models including at least a driving side inertia moment and a load side inertia moment calculated based on the inertia moment of the drive source of the vehicle 1.

As illustrated in Fig. 5A, the sum model M1 includes a sum mode driving side inertia moment $J_{SM}$, a spring damper designed with a rigidity $K_S$ and a viscosity $D_S$, and a sum mode load side inertia moment (sum mode wheel nominal inertia moment) $J_{SL}$. The sum mode driving side inertia moment $J_{SM}$ is calculated based on an inertia moment $J_M$ of a drive source (a left drive source and a right drive source), and for example, $J_{SM} = G^2 J_M$.

The sum mode load side inertia moment $J_{SL}$ is calculated based on a vehicle body weight M (converted based on wheel), and for example, $J_{SL} = J_{Lt} + M(1 - \lambda_S)r^2$. $J_{Lt}$ is a tire inertia moment, and r is a tire dynamic radius. The term $\lambda_S$ represents a sum mode actual slip ratio, and is, for example, a value corresponding to a half of a sum of an actual slip ratio $\lambda_L$ of the left wheel 5L and an actual slip ratio $\lambda_R$ of the right wheel 5R. Friction may also be considered when the sum mode driving side inertia moment $J_{SM}$ and the sum mode load side inertia moment $J_{SL}$ are calculated. Equations of motion related to the sum model M1, and the like are shown below.

[Math. 1]

Equation of motion of driving side

$$J_{SM}\dot{\omega}_{Sds} = T_{Sin} - T_{Sds} \qquad \text{Equation 1}$$

Equation of motion of load side

$$J_{SL}\dot{\omega}_{SL} = T_{Sds} - T_{SL} \qquad \text{Equation 2}$$

Equation of motion of spring damper system

$$T_{Sds} = K_S \int (\omega_{Sds} - \omega_{SL}) + D_S(\omega_{Sds} - \omega_{SL}) \qquad \text{Equation 3}$$

Sum mode driving side inertia moment $J_{SM}$

$$J_{SM} = G^2 J_M \qquad \text{Equation 4}$$

Sum mode load side inertia moment $J_{SL}$

$$J_{SL} = J_{Lt} + M(1 - \lambda_S)r^2 \qquad \text{Equation 5}$$

A sum mode driving side angular velocity $\omega_{Sds}$ is a half a sum of a left driving side angular velocity $\omega_{Lds}$ and a right driving side angular velocity $\omega_{Rds}$, and a sum mode load side angular velocity $\omega_{SL}$ is a half a sum of the left wheel angular velocity $\omega_{LL}$ and the right wheel angular velocity $\omega_{RL}$. A ratio of the sum mode load side angular velocity $\omega_{SL}$ to the sum mode driving side angular velocity $\omega_{Sds}$ is given by the following transfer function.

[Math. 2]

$$\frac{\omega_{SL}}{\omega_{Sds}} = \frac{D_S s + K_S}{J_{SL} s^2 + D_S s + K_S} \qquad \text{Equation 6}$$

As illustrated in Fig. 5B, the difference model M2 includes a difference mode driving side inertia moment $J_{DM}$ which is an equivalent inertia moment when a left-right difference is generated (during turning), a spring damper designed with a rigidity $K_S$ and a viscosity $D_S$, and a difference mode load side inertia moment (difference mode wheel nominal inertia moment) $J_{DL}$. The difference mode driving side inertia moment $J_{DM}$ is calculated based on the inertia moment $J_M$ of the drive sources (the left drive source and the right drive source) and the torque difference amplification factors ($b_1$, $b_2$, and the like) of the power distribution mechanism 3, and for example, $J_{DM} = (2b_1 + 1)^2 G^2 J_M$.

The difference mode load side inertia moment $J_{DL}$ is calculated based on a yaw inertia moment (converted based on wheel) of the vehicle 1, and for example, $J_{DL} = J_{Lt} + r^2 I_Z(1 - \lambda_D)/2(d/2)^2$. $I_Z$ is a vehicle inertia moment, and d is a tread. The term $\lambda_D$ represents a difference mode actual slip ratio, and is, for example, a value corresponding to a half of a difference between the actual slip ratio $\lambda_L$ of the left wheel 5L and the actual slip ratio $\lambda_R$ of the right wheel 5R. Friction may also be considered when the difference mode driving side inertia moment $J_{DM}$ and the difference mode load side inertia moment $J_{DL}$ are calculated. Equations of motion related to the difference model M2, and the like are shown below.

[Math. 3]

Equation of motion of driving side

$$J_{DM} \dot{\omega}_{Dds} = T_{Din} - T_{Dds} \qquad \text{Equation 7}$$

Equation of motion of load side

$$J_{DL} \dot{\omega}_{DL} = T_{Dds} - T_{DL} \qquad \text{Equation 8}$$

Equation of motion of spring damper system

$$T_{Dds} = K_S \int (\omega_{Dds} - \omega_{DL}) + D_S(\omega_{Dds} - \omega_{DL}) \qquad \text{Equation 9}$$

Difference mode driving side inertia moment $J_{DM}$

$$J_{DM} = (2b_1 + 1)^2 G^2 J_M \qquad \text{Equation 10}$$

Difference mode load side inertia moment $J_{DL}$

$$J_{DL} = J_{Lt} + \frac{r^2 I_Z(1 - \lambda_D)}{2(d/2)^2} \qquad \text{Equation 11}$$

A difference mode driving side angular velocity $\omega_{Dds}$ is a half a difference between the left driving side angular velocity $\omega_{Lds}$ and the right driving side angular velocity $\omega_{Rds}$, and a difference mode load side angular velocity $\omega_{DL}$ is a half a difference between the left wheel angular velocity $\omega_{LL}$ and the right wheel angular velocity $\omega_{RL}$. A ratio of the difference mode load side angular velocity $\omega_{DL}$ to the difference mode driving side angular velocity $\omega_{Dds}$ is given by the following transfer function.

[Math. 4]

$$\frac{\omega_{DL}}{\omega_{Dds}} = \frac{D_S s + K_S}{J_{DL} s^2 + D_S s + K_S} \qquad \text{Equation 12}$$

The calculation unit 11 calculates estimated wheel speeds $\omega_{LE}$ and $\omega_{RE}$ based on the sum model M1, the difference model M2, and the motor angular velocities $\omega_{LM}$ and $\omega_{RM}$. Here, for example, on the basis of the motor angular velocities $\omega_{LM}$ and $\omega_{RM}$ detected by the resolvers 17, the sum mode driving side angular velocity $\omega_{Sds}$ and the difference mode driving side angular velocity $\omega_{Dds}$ corresponding thereto are calculated. The sum mode load side angular velocity $\omega_{SL}$ and the difference mode load side angular velocity $\omega_{DL}$ corresponding to the estimated wheel speeds $\omega_{LE}$ and $\omega_{RE}$ are calculated based on Equations 6 and 12, the sum mode driving side angular velocity $\omega_{Sds}$, and the difference mode driving side angular velocity $\omega_{Dds}$. Information of the sum mode load side angular velocity $\omega_{SL}$ and the difference mode load side angular velocity $\omega_{DL}$ calculated here is transmitted to, for example, the control unit 12.

When the driving force control is performed using the estimated wheel speeds $\omega_{LE}$ and $\omega_{RE}$, a time lag for ascertaining the behavior of the vehicle 1 can be reduced as compared with a case where the driving force control is performed using the actual wheel speeds $\omega_{LL}$ and $\omega_{RL}$ obtained by the wheel speed sensors 18. For example, a time lag from the time point when the wheel speed sensors 18 detect the actual wheel speeds $\omega_{LL}$ and $\omega_{RL}$ to the time point when the information is transmitted to the vehicle control device 10 may be approximately 10 to 20 milliseconds in accordance with the communication state of an in-vehicle communication network. On the other hand, a time lag from the time point when the resolvers 17 detect the motor angular velocities $\omega_{LM}$ and $\omega_{RM}$ to the time point when the vehicle control device 10 calculates the estimated wheel speeds $\omega_{LE}$ and $\omega_{RE}$ (sum mode load side angular velocity $\omega_{SL}$, difference mode load side angular velocity $\omega_{DL}$) is only several milliseconds. This enhances the responsiveness of the driving force control using the estimated wheel speeds $\omega_{LE}$ and $\omega_{RE}$. In the process of calculating the estimated wheel speeds $\omega_{LE}$ and $\omega_{RE}$, the vibration components contained in the motor angular velocities $\omega_{LM}$ and $\omega_{RM}$ obtained by the resolver 17 decrease. Thus, the stability of the driving force control using the estimated wheel speeds $\omega_{LE}$ and $\omega_{RE}$ is enhanced.

The control unit 12 performs the driving force control using the estimated wheel speeds $\omega_{LE}$ and $\omega_{RE}$ calculated by the calculation unit 11. Here, for example, execution conditions of the driving force control are determined based on the estimated wheel speeds $\omega_{LE}$ and $\omega_{RE}$, and the values of the estimated wheel speeds $\omega_{LE}$ and $\omega_{RE}$ are reflected in a controlled variable (motor output, motor torque, motor angular velocity, and the like) related to the driving force control. The driving force control here includes, for example, traction control (control for adjusting a motor output so as to achieve a required driving force without slipping the wheel 5), slip control (control for stabilizing the posture of the vehicle 1 by optimizing a slip amount of each of the left and right wheels 5), and vibration suppression control (control for adjusting the left and right motor outputs so as not to generate resonance of the left and right wheels 5).

In such driving force control, by using information of the estimated wheel speeds $\omega_{LE}$ and $\omega_{RE}$ estimated from the motor angular velocities $\omega_{LM}$ and $\omega_{RM}$, vibration components can be reduced as compared with a case where the unmodified motor angular velocities $\omega_{LM}$ and $\omega_{RM}$ are used, and the rotation state of the wheels 5 closer to the actual situation can be ascertained. A time lag can be shortened as compared with a case where information on the actual wheel speeds $\omega_{LL}$ and $\omega_{RL}$ is used, and the rotation state of the wheels 5 can be ascertained in real time.

3. Specific example

Fig. 6 is a block diagram illustrating specific control contents of the vehicle control device 10 including the calculation unit 11 and the control unit 12. In the calculation unit 11, a plant model including the sum model M1 and the difference model M2 is prepared. The calculation unit 11 is provided with a sum difference conversion unit 21, an actual slip ratio calculation unit 22, an estimation unit 23, and a left-right conversion unit 24. The control unit 12 is provided with a flag setting unit 31, an FF controlled variable setting unit 32, and an FB controlled variable setting unit 33.

The sum difference conversion unit 21 converts the motor angular velocities $\omega_{LM}$ and $\omega_{RM}$ detected by the resolvers 17 into the sum mode driving side angular velocity $\omega_{Sds}$ and the difference mode driving side angular velocity $\omega_{Dds}$ in the sum model M1 and the difference model M2. Here, for example, the left driving side angular velocity $\omega_{Lds}$ and the right driving side angular velocity $\omega_{Rds}$ are calculated based on the motor angular velocities $\omega_{LM}$ and $\omega_{RM}$. The value of the sum mode driving side angular velocity $\omega_{Sds}$ is a half a sum of the left driving side angular velocity $\omega_{Lds}$ and the right driving side angular velocity $\omega_{Rds}$, and the value of the difference mode driving side angular velocity $\omega_{Dds}$ is a half a difference between the left driving side angular velocity $\omega_{Lds}$ and the right driving side angular velocity $\omega_{Rds}$. A relational expression between the motor angular velocities $\omega_{LM}$ and $\omega_{RM}$ and the left driving side angular velocity $\omega_{Lds}$ and the right driving side angular velocity $\omega_{Rds}$ will be exemplified below.

[Math. 5]

Left motor angular velocity $\omega_{LM}$

$$\omega_{LM} = G\{(b_1 + 1)\omega_{Lds} - b_1\omega_{Rds}\} \qquad \text{Equation 13}$$

Right motor angular velocity $\omega_{RM}$

$$\omega_{RM} = G\{(b_2 + 1)\omega_{Rds} - b_2\omega_{Lds}\} \qquad \text{Equation 14}$$

The actual slip ratio calculation unit 22 calculates the actual slip ratios $\lambda_L$ and $\lambda_R$ of the left and right wheels 5, and calculates the sum mode actual slip ratio $\lambda_S$ and the difference mode actual slip ratio $\lambda_D$ corresponding thereto. The actual slip ratios $\lambda_L$ and $\lambda_R$ are calculated based on, for example, reference wheel speeds $V_{rlx}$ and $V_{rrx}$ of the left and right wheels 5 and wheel speeds $V_{LR}$ (= $r\omega_{LL}$) and $V_{RR}$ (= $r\omega_{RL}$) corresponding to the actual wheel speeds $\omega_{LL}$ and $\omega_{RL}$. $V_x$ is a vehicle body speed, and $\gamma$ is a yaw rate.

The value of the sum mode actual slip ratio $\lambda_S$ is, for example, a half a sum of the left and right actual slip ratios $\lambda_L$ and $\lambda_R$, and the value of the difference mode actual slip ratio $\lambda_D$ is, for example, a half a difference between the left and right actual slip ratios $\lambda_L$ and $\lambda_R$.

Instead of the actual wheel speeds $\omega_{LL}$ and $\omega_{RL}$ and the wheel speeds $V_{LR}$ and $V_{RR}$ corresponding thereto, the actual slip ratios $\lambda_L$ and $\lambda_R$ may be calculated using the estimated wheel speeds $\omega_{LE}$ and $\omega_{RE}$ obtained in the previous calculation cycle and the estimated wheel speeds $V_{LE}$ (= $r\omega_{LE}$) and $V_{RE}$ (= $r\omega_{RE}$) corresponding thereto.

[Math. 6]

Right wheel actual slip ratio $\lambda_R$

$$\lambda_R = \left|\frac{V_{RR} - V_{rrx}}{V_{rrx}}\right| = \left|\frac{V_{RR} - (V_x + \frac{d}{2}\gamma)}{V_{rrx}}\right| \qquad \text{Equation 15}$$

Left wheel actual slip ratio $\lambda_L$

$$\lambda_L = \left|\frac{V_{LR} - V_{rlx}}{V_{rlx}}\right| = \left|\frac{V_{LR} - (V_x - \frac{d}{2}\gamma)}{V_{rlx}}\right| \qquad \text{Equation 16}$$

Sum mode actual slip ratio $\lambda_S$

$$\lambda_S = \frac{\lambda_R + \lambda_L}{2} \qquad \text{Equation 17}$$

Difference mode actual slip ratio $\lambda_D$

$$\lambda_D = \frac{\lambda_R - \lambda_L}{2} \qquad \text{Equation 18}$$

The estimation unit 23 calculates the sum mode load side angular velocity $\omega_{SL}$ and the difference mode load side angular velocity $\omega_{DL}$ corresponding to the estimated wheel speeds $\omega_{LE}$ and $\omega_{RE}$. The estimation unit 23 calculates the sum mode load side angular velocity $\omega_{SL}$ based on Equation 6 and the sum mode driving side angular velocity $\omega_{Sds}$. The value of the sum mode load side inertia moment $J_{SL}$ in Equation 6 is calculated based on Equation 5 and the sum mode actual slip ratio $\lambda_S$. The estimation unit 23 calculates the difference mode load side angular velocity $\omega_{DL}$ based on Equation 12 and the difference mode driving side angular velocity $\omega_{Dds}$. The value of the difference mode load side inertia moment $J_{DL}$ in Equation 12 is calculated based on Equation 11 and the difference mode actual slip ratio $\lambda_D$.

The left-right conversion unit 24 converts the sum mode load side angular velocity $\omega_{SL}$ and the difference mode load side angular velocity $\omega_{DL}$ calculated by the estimation unit 23 into an estimated left wheel angular velocity $\omega_{LE}$ and an estimated right wheel angular velocity $\omega_{RE}$ which are estimated wheel speeds of the left and right wheels 5. Here, for example, a sum of the sum mode load side angular velocity $\omega_{SL}$ and the difference mode load side angular velocity $\omega_{DL}$ is calculated as the estimated left wheel angular velocity $\omega_{LE}$, and a difference between the sum mode load side angular

velocity $\omega_{SL}$ and the difference mode load side angular velocity $\omega_{DL}$ is calculated as the estimated right wheel angular velocity $\omega_{RE}$.

The control unit 12 performs driving force control, using the estimated angular velocities $\omega_{LE}$ and $\omega_{RE}$ (estimated wheel speeds) of the left and right wheels 5 calculated by the calculation unit 11, a required torque, an estimated vehicle body speed, a longitudinal acceleration, a lateral acceleration, and the like. The required torque is calculated based on, for example, an accelerator opening degree and a vehicle body speed. The estimated vehicle body speed is calculated based on the actual wheel speeds $\omega_{LL}$ and $\omega_{RL}$ detected by the wheel speed sensor 18. The longitudinal acceleration and the lateral acceleration may be calculated based on the actual wheel speeds $\omega_{LL}$ and $\omega_{RL}$ detected by the wheel speed sensor 18, or may be detected by a longitudinal acceleration sensor or a lateral acceleration sensor (not illustrated).

The flag setting unit 31 sets a control flag X associated with an execution state of driving force control (for example, traction control, slip control, and the like). The control flag X is a binary flag of which value is set to 1 when the driving force control is being performed and of which value is set to 0 when the driving force control is not being performed. For example, when the difference between the estimated wheel speed $\omega_{LE}$ or $\omega_{RE}$ and a target wheel speed becomes a predetermined difference or more in either of the left and right wheels 5, it is determined that the tire starts to slip, and the control flag X is set to 1. On the other hand, when the difference between the estimated wheel speed $\omega_{LE}$ or $\omega_{RE}$ and the target wheel speed becomes less than the predetermined difference, it is determined that the tire is no longer slipping, and the control flag X is set to 0.

The FF controlled variable setting unit 32 sets an FF torque related to feedforward control (open-loop control) in the driving force control (for example, traction control, slip control, and the like), and sets a torque necessary for causing the actual wheel speeds $\omega_{LL}$ and $\omega_{RL}$ of the left and right wheels 5 to follow the target wheel speed. The FF controlled variable setting unit 32 sets the FF torque when the control flag X set by the flag setting unit 31 is 1.

The FB controlled variable setting unit 33 sets an FB torque related to feedback control (closed loop control) in the driving force control (for example, traction control, slip control, and the like), and sets a torque for reducing a difference between the actual wheel speeds $\omega_{LL}$ and $\omega_{RL}$ of the left and right wheels 5 and the target wheel speed as a feedback correction amount. The FB controlled variable setting unit 33 sets the FB torque when the control flag X set by the flag setting unit 31 is 1. A sum of the FB torque set here and the FF torque set by the FF controlled variable setting unit 32 is reflected in a final instruction torque of the motor 2.

The values of the estimated wheel speeds (the estimated left wheel angular velocity $\omega_{LE}$ and the estimated right wheel angular velocity $\omega_{RE}$) based on the motor angular velocities $\omega_{LM}$ and $\omega_{RM}$ may be used to set the FF torque by the FF controlled variable setting unit 32 and set the FB torque by the FB controlled variable setting unit 33. For example, when a second control unit that adds a torque correction amount for damping control is provided at a subsequent stage of the control unit 12, the values of the estimated left wheel angular velocity $\omega_{LE}$ and the estimated right wheel angular velocity $\omega_{RE}$ may be used for control by the second control unit.

4. Actions

Figs. 7A to 7C are graphs showing results of a simulation (simulation experiment by a computer) for examining a relationship, at the time of start of the vehicle 1, among actual wheel speeds $\omega_{LL}$ and $\omega_{RL}$ (detection values of the wheel speed sensor 18), values (resolver conversion values $\omega_{Lds}$ and $\omega_{Rds}$) obtained by converting motor angular velocities $\omega_{LM}$ and $\omega_{RM}$ (detection values of the resolvers 17) into wheel speed equivalent values, and estimated wheel speeds $\omega_{LE}$ and $\omega_{RE}$. Fig. 7A illustrates results on a road surface (high $\mu$ road) having a relatively high friction coefficient, and Figs. 7B and 7C illustrate results on a road surface (low $\mu$ road) having a relatively low friction coefficient. In Figs. 7A and 7B, it is assumed that the actual slip ratio $\lambda$ is close to 0 %, and in Fig. 7C, it is assumed that the actual slip ratio $\lambda$ is close to 100%.

As illustrated in Fig. 7A, when the vehicle starts on a road surface having a relatively high friction coefficient, the resolver conversion values $\omega_{Lds}$ and $\omega_{Rds}$ increase prior to changes in the actual wheel speeds $\omega_{LL}$ and $\omega_{RL}$. The resolver conversion values $\omega_{Lds}$ and $\omega_{Rds}$ include more vibration components than the actual wheel speeds $\omega_{LL}$ and $\omega_{RL}$. Thus, when the driving force control based on the resolver conversion values $\omega_{Lds}$ and $\omega_{Rds}$ is performed, malfunction due to the influence of the vibration components may occur. For example, it is erroneously determined that a difference between the estimated wheel speeds $\omega_{LE}$ and $\omega_{RE}$ and a target wheel speed is a predetermined difference or more before the vehicle 1 starts, the control flag X is set to 1, and driving force control (for example, slip control in which a motor torque is suppressed) is started.

On the other hand, the estimated wheel speeds $\omega_{LE}$ and $\omega_{RE}$ do not contain as many vibration components as the resolver conversion values $\omega_{Lds}$ and $\omega_{Rds}$, and the estimated wheel speeds $\omega_{LE}$ and $\omega_{RE}$ stably increase before changes in the actual wheel speeds $\omega_{LL}$ and $\omega_{RL}$. Accordingly, by performing the driving force control based on the estimated wheel speeds $\omega_{LE}$ and $\omega_{RE}$, erroneous determination regarding the control flag X is suppressed, and controllability and stability of the driving force control are improved.

As illustrated in Fig. 7B, even when the vehicle 1 starts on a road surface having a relatively low friction coefficient, the estimated wheel speeds $\omega_{LE}$ and $\omega_{RE}$ have less vibration components than the resolver conversion values $\omega_{Lds}$ and

$\omega_{Rds}$ and stably increase. Thus, by performing the driving force control based on the estimated wheel speeds $\omega_{LE}$ and $\omega_{RE}$, controllability and stability of the driving force control are improved. In the graph of Fig. 7B, rising timings of the estimated wheel speeds $\omega_{LE}$ and $\omega_{RE}$ are slightly delayed as compared with rising timings of the actual wheel speeds $\omega_{LL}$ and $\omega_{RL}$, and there is a slight difficulty in terms of responsiveness. It is considered that such a deviation of the estimated wheel speeds $\omega_{LE}$ and $\omega_{RE}$ from the actual wheel speeds $\omega_{LL}$ and $\omega_{RL}$ occurs by assuming an actual slip ratio $\lambda$ of 0% even though the road surface has a low friction coefficient (that is, calculation errors of the estimated wheel speeds $\omega_{LE}$ and $\omega_{RE}$ increase due to the inaccuracy of the actual slip ratio $\lambda$).

Fig. 7C is a graph showing a simulation result assuming an actual slip ratio $\lambda$ of approximately 100%. This graph shows that rising timings of the estimated wheel speeds $\omega_{LE}$ and $\omega_{RE}$ substantially coincide with rising timings of the actual wheel speeds $\omega_{LL}$ and $\omega_{RL}$, which exhibits that good responsiveness is obtained. It is understood that, by regarding the actual slip ratio $\lambda$ as a variable value that can vary up to a large value to some extent as the above, rather than regarding the actual slip ratio $\lambda$ as a fixed value close to 0%, the calculation errors of the estimated wheel speeds $\omega_{LE}$ and $\omega_{RE}$ are reduced, and not only the controllability and stability of driving force control but also the responsiveness of the control is improved.

5. Effects

(1) The vehicle control device 10 of the present example is a vehicle control device 10 that includes plant models M1 and M2 including driving side inertia moments $J_{SM}$ and $J_{DM}$ and load side inertia moments $J_{SL}$ and $J_{DL}$ calculated based on an inertia moment $J_M$ of the drive source (motor 2) of the vehicle 1. The vehicle control device 10 includes the calculation unit 11 and the control unit 12. The calculation unit 11 calculates estimated wheel speeds $\omega_{LE}$ and $\omega_{RE}$ based on the plant models M1 and M2 and the motor angular velocities $\omega_{LM}$ and $\omega_{RM}$ (drive source angular velocities). The control unit 12 performs driving force control, using the estimated wheel speeds $\omega_{LE}$ and $\omega_{RE}$.

With such a configuration, as compared with a case where the driving force control is performed using the actual wheel speeds $\omega_{LL}$ and $\omega_{RL}$, it is possible to reduce a time lag for ascertaining the behavior of the vehicle 1 and to ascertain the rotation state of the wheel 5 in real time. Since vibration components are reduced as compared with a case where the driving force control is performed using the unmodified motor angular velocities $\omega_{LM}$ and $\omega_{RM}$, it is possible to suppress the occurrence of malfunction and destabilization of the operation state of the motor, and it is possible to ascertain the rotation state of the wheel 5 closer to the actual situation. Thus, responsiveness, stability, and controllability of the driving force control can be improved.

For example, in the traction control, it is possible to generate a motor output corresponding to a required driving force while suppressing the slip of the wheel 5 with high accuracy. In the slip control, it is possible to optimize a slip amount of each of the left and right wheels 5 and improve the stability of the posture of the vehicle 1 during turning. In the vibration suppression control, it is possible to effectively suppress the resonance of the left and right wheels 5.

(2) The calculation unit 11 includes a transfer function expressing input and output characteristics of a two-inertia system including load side inertia moments $J_{SL}$ and $J_{DL}$, a spring damper designed with a rigidity $K_S$ and a viscosity $D_S$, and driving side inertia moments $J_{SM}$ and $J_{DM}$. With such a configuration, the load side angular velocities $\omega_{SL}$ and $\omega_{DL}$ can be accurately estimated, and the accuracy of calculation of the estimated wheel speeds $\omega_{LE}$ and $\omega_{RE}$ can be increased. Thus, responsiveness, stability, and controllability of the driving force control can be improved.

(3) The load side inertia moments $J_{SL}$ and $J_{DL}$ are variably set based on the actual slip ratios $\lambda_S$ and $\lambda_D$. In this manner, it is possible to increase the accuracy of calculating the estimated wheel speeds $\omega_{LE}$ and $\omega_{RE}$ by reflecting the actual slip ratios $\lambda_S$ and $\lambda_D$ in the load side inertia moments $J_{SL}$ and $J_{DL}$. For example, as illustrated in Fig. 7C, a difference between the actual wheel speeds $\omega_{LL}$ and $\omega_{RL}$ and the estimated wheel speeds $\omega_{LE}$ and $\omega_{RE}$ can be reduced. Thus, responsiveness, stability, and controllability of the driving force control can be improved.

(4) The actual slip ratios $\lambda_S$ and $\lambda_D$ are calculated based on the actual wheel speeds $\omega_{LL}$ and $\omega_{RL}$ (or estimated wheel speeds $\omega_{LE}$ and $\omega_{RE}$) and the vehicle body speed $V_x$, as shown in, for example, Equations 15 to 18. In this manner, it is possible to increase the accuracy of calculation of the estimated wheel speeds $\omega_{LE}$ and $\omega_{RE}$ by reflecting the actual rotation state of the left and right wheels 5 in the load side inertia moments $J_{SL}$ and $J_{DL}$. Thus, responsiveness, stability, and controllability of the driving force control can be improved.

(5) The calculation unit 11 calculates the load side inertia moments $J_{SL}$ and $J_{DL}$ and the actual slip ratios $\lambda_S$ and $\lambda_D$, using the sum model M1, which is obtained by modeling the motion states of the left drive system and the right drive system during straight traveling of the vehicle 1, and the difference model M2, which is obtained by modeling the motion states of the left drive system and the right drive system during turning of the vehicle 1. In this manner, by using the sum model M1 and the difference model M2, it is possible to obtain the load side inertia moments $J_{SL}$ and $J_{DL}$ and the actual slip ratios $\lambda_S$ and $\lambda_D$ with high accuracy and to improve the responsiveness, stability, and controllability of the driving force control.

(6) The plant models M1 and M2 include transfer functions shown in Equations 6 and 12. The transfer functions define a relationship between a ratio of the load side angular velocities $\omega_{SL}$ and $\omega_{DL}$ to the driving side angular velocities $\omega_{Sds}$ and $\omega_{Dds}$ and the load side inertia moments $J_{SL}$ and $J_{DL}$. By using such transfer functions, it is possible to calculate the load side angular velocities $\omega_{SL}$ and $\omega_{DL}$ with high accuracy and further increase the accuracy of calculation of the estimated wheel speeds $\omega_{LE}$ and $\omega_{RE}$. Thus, responsiveness, stability, and controllability of the driving force control can be improved.

(7) The load side inertia moments $J_{SL}$ and $J_{DL}$ are calculated based on Equations 5 and 11. Equation 5 defines a relationship among the load side inertia moment $J_{SL}$, the tire inertia moment $J_{Lt}$, the sum mode actual slip ratio $\lambda_S$, and the vehicle body weight M in the sum model. Equation 11 defines a relationship among the load side inertia moment $J_{DL}$, the tire inertia moment $J_{Lt}$, the difference mode actual slip ratio $\lambda_D$, and the vehicle inertia moment $I_Z$ in the difference model. By using these equations, it is possible to calculate the load side inertia moments $J_{SL}$ and $J_{DL}$ in each of the sum model and the difference model with high accuracy and further increase the accuracy of calculation of the estimated wheel speeds $\omega_{LE}$ and $\omega_{RE}$. Thus, responsiveness, stability, and controllability of the driving force control can be improved.

6. Others

The foregoing example is merely exemplary and is not intended to exclude the application of various modifications and techniques which are not explicitly described in the present embodiment. Each configuration according to the present embodiment can be modified in various ways without departing from the gist of the present embodiment. Also, each configuration of the embodiments can be selected or omitted according to the requirement, or can be combined appropriately.

In the above embodiment, the vehicle control device 10 applied to the rear wheels of the vehicle 1 has been exemplified. However, a similar vehicle control device may be applied to the front wheels, or a similar vehicle control device may be applied to both the front and rear wheels. At least in the vehicle 1 including the vehicle control device 10 that controls driving forces of the left drive system and the right drive system, it is possible to achieve the same effects as those of the above embodiment by performing the same control as that of the above embodiment.

In the above embodiment, the vehicle 1 on which the pair of motors 2 is mounted as the drive source has been exemplified. However, an internal combustion engine may be applied instead of the motors 2, and a specific type of the drive source is irrelevant. In the above example, the driving force control of the motors 2 has been described in detail, but the same driving force control can be applied to other drive sources, and may be applied to, for example, driving force control of an internal combustion engine. In this case, for example, the estimated wheel speeds $\omega_{LE}$ and $\omega_{RE}$ may be calculated based on the sum model M1, the difference model M2 and an engine speed (driving force angular velocity) obtained by an engine speed sensor.

Although the vehicle 1 including the vehicle drive device (DM-AYC device) including the pair of motors 2 and the power distribution mechanism 3 has been exemplified, the present embodiment is also applicable to, for example, a vehicle without the power distribution mechanism 3 and an in-wheel motor vehicle. As illustrated in Figs. 5A and 5B, the vehicle 1 that performs driving force control using the plant model including at least the driving side inertia moments $J_{SM}$ and $J_{DM}$ and the load side inertia moments $J_{SL}$ and $J_{DL}$ can perform the same control as in the above embodiment and can acquire the same actions and effects as those of the above embodiment.

In the actual slip ratio calculation unit 22 of the above embodiment, the actual slip ratios $\lambda_L$ and $\lambda_R$ are calculated based on the reference wheel speeds $V_{rlx}$ and $V_{rrx}$ and the actual wheel speeds $V_{LR}$ and $V_{RR}$, but alternatively simple actual slip ratios $\lambda_L$ and $\lambda_R$ according to the value of the control flag X may be calculated. For example, when the control flag X is 1, the values of the actual slip ratios $\lambda_L$ and $\lambda_R$ of the left and right wheels 5 may be set to a first predetermined value (for example, 1 which is a value corresponding to a slip ratio of 100%). The first predetermined value can be arbitrarily set within a range of 0 to 1, for example.

When the control flag X is 0, the values of the actual slip ratios $\lambda_L$ and $\lambda_R$ of the left and right wheels 5 may be set to a second predetermined value (for example, 0 which is a value corresponding to a slip ratio of 0%). The second predetermined value can be arbitrarily set within a range of 0 to the first predetermined value. In this manner, by changing the actual slip ratios $\lambda_L$ and $\lambda_R$ in accordance with the execution state of the driving force control, the driving force control can be executed with relatively high accuracy with a simple configuration.

In implementing the vehicle control device according to the present invention, a driving force control method described in the following references can be referred to.

· Hiroshi Fujimoto, Takeshi Takano, Hidetoshi Nobumoto, and Toshimi Okazaki, "Driving Force Control Method Based on High Accuracy Slip Ratio Control", Mazda Technical Review, No. 32, pp. 228-233 (2015)
· Hiroshi Fujimoto, Junya Amada, and Takayuki Miyajima, "Development and Control of Electric Vehicle with Variable Drive Unit System", Proceedings of the 2013 JSAE Annual Spring Congress, No. 8-13, pp. 17-20 (2013)

## EP 4 778 771 A1

· Masataka Yoshimura and Hiroshi Fujimoto, "Driving Torque Control Method for Electric Vehicle with In-Wheel Motors", Transactions of the Institute of Electrical Engineers of Japan. D, Vol. 131, No. 5, pp. 721-728 (2011)

[Industrial Applicability]

The present invention can be used in the manufacturing industry of a vehicle control device mounted on a vehicle, and can also be used in the manufacturing industry of a vehicle on which a vehicle control device is mounted.

[Reference Signs List]

| | |
|---|---|
| 1 | Vehicle |
| 2 | Motor (drive source) |
| 3 | Power distribution mechanism |
| 4 | Axle |
| 4L | Left axle |
| 4R | Right axle |
| 5 | Left and right wheels (wheels) |
| 5L | Left wheel |
| 5R | Right wheel |
| 6 | Inverter |
| 7 | Battery |
| 10 | Vehicle control device |
| 11 | Calculation unit |
| 12 | Control unit |
| 14 | Accelerator opening sensor |
| 15 | Brake sensor |
| 16 | Steering angle sensor |
| 17 | Resolver |
| 18 | Wheel speed sensor |
| 21 | Sum difference conversion unit |
| 22 | Actual slip ratio calculation unit |
| 23 | Estimation unit |
| 24 | Left-right conversion unit |
| 31 | Flag setting unit |
| 32 | FF controlled variable setting unit |
| 33 | FB controlled variable setting unit |
| M1 | Sum model (plant model) |
| M2 | Difference model (plant model) |
| $J_{SM}, J_{DM}$ | Driving side inertia moment |
| $J_{SL}, J_{DL}$ | Load side inertia moment |
| $\omega_{LM}, \omega_{RM}$ | Motor angular velocity (drive source angular velocity) |
| $\omega_{LE}, \omega_{RE}$ | Estimated wheel speeds (estimated angular velocities of left and right wheels) |

## Claims

1. A vehicle control device including a plant model including a driving side inertia moment and a load side inertia moment calculated based on an inertia moment of a drive source of a vehicle, the vehicle control device comprising:

   a calculation unit that calculates an estimated wheel speed based on the plant model and a drive source angular velocity; and
   a control unit that performs driving force control of the vehicle, using the estimated wheel speed.

2. The vehicle control device according to claim 1, wherein
   the calculation unit includes a transfer function expressing input and output characteristics of a two-inertia system including the load side inertia moment, a spring damper designed with a rigidity and a viscosity, and the driving side inertia moment.

3. The vehicle control device according to claim 2, wherein
the load side inertia moment is variably set based on an actual slip ratio.

4. The vehicle control device according to claim 3, wherein
the actual slip ratio is calculated based on an actual wheel speed or the estimated wheel speed and a vehicle body speed of the vehicle.

5. The vehicle control device according to claim 3, wherein
the actual slip ratio is changed depending on an execution state of the driving force control.

6. The vehicle control device according to any one of claims 3 to 5, wherein
the calculation unit calculates the load side inertia moment and the actual slip ratio by using a sum model, which is obtained by modeling motion states of a left drive system and a right drive system during straight traveling of the vehicle, and a difference model, which is obtained by modeling motion states of the left drive system and the right drive system during turning of the vehicle.

7. A vehicle control method using a plant model including a driving side inertia moment and a load side inertia moment calculated based on an inertia moment of a drive source of a vehicle, the vehicle control method comprising:

   calculating an estimated wheel speed based on the plant model and a drive source angular velocity; and
   performing driving force control of the vehicle, using the estimated wheel speed.

## Fig. 1

# Fig. 2

# Fig. 3

# Fig. 4

# Fig. 5 A

Sum model (Two-inertia system model)

$$J_{SM} = G^2 \cdot J_M \qquad\qquad J_{SL} = J_{Lt} + M\,(1-\lambda_S)\,r^2$$

$$\frac{\omega_{SL}}{\omega_{Sds}} = \frac{D_S\,s + K_S}{J_{SL}\,s^2 + D_S\,s + K_S}$$

# Fig. 5 B

Difference model (Two-inertia system model)

$$J_{DM} = (2b+1)^2 \cdot G^2 \cdot J_M \qquad J_{DL} = J_{Lt} + \frac{r^2 Iz(1-\lambda_D)}{2(\frac{d}{2})^2}$$

$$\frac{\omega_{DL}}{\omega_{Dds}} = \frac{D_S\,s + K_S}{J_{DL}\,s^2 + D_S\,s + K_S}$$

# Fig. 6

**12**

Control unit

**32**

Required torque →
Estimated wheel speed →
Longitudinal acceleration →
Lateral acceleration →

**31**

Flag setting unit

Control flag $X$

FF controlled variable setting unit

$+$
$+$

→ Instruction torque

**33**

FB controlled variable setting unit

Estimated angular velocities (estimated wheel speeds) of left & right wheels $\omega_{LE}, \omega_{RE}$

Calculation unit ~**11**

**24**~ Left-right conversion unit

Load side angular velocity $\omega_{SL}, \omega_{DL}$

**23**~

Estimation unit

Plant model

$$\frac{\omega_{SL}}{\omega_{Sds}} = \frac{D_S s + K_S}{J_{SL} s^2 + D_S s + K_S}$$

$$J_{SL} = J_{Lt} + M(1 - \lambda_S) r^2$$

- - - - - - - - - - - - - - - - - - - - - - -

$$\frac{\omega_{DL}}{\omega_{Dds}} = \frac{D_S s + K_S}{J_{DL} s^2 + D_S s + K_S}$$

$$J_{DL} = J_{Lt} + \frac{r^2 Iz(1 - \lambda_D)}{2(\frac{d}{2})^2}$$

**21**

Sum difference conversion unit

Driving side angular velocity $\omega_{Sds}, \omega_{Dds}$

Motor angular velocity $\omega_{LM}, \omega_{RM}$

**22**

Actual slip ratio $\lambda_S, \lambda_D$

Actual slip ratio calculation unit

Reference wheel speed $V_{rlx}, V_{rrx}$
Actual wheel speed $\omega_{LL}, \omega_{RL}$
Control flag $X$

Fig. 7 A

Estimated wheel speed — $\omega_{LE}, \omega_{RE}$
Resolver conversion value — $\omega_{Lds}, \omega_{Rds}$
Actual wheel speed — $\omega_{LL}, \omega_{RL}$

Fig. 7 B

Estimated wheel speed — $\omega_{LE}, \omega_{RE}$
Resolver conversion value — $\omega_{Lds}, \omega_{Rds}$
Actual wheel speed — $\omega_{LL}, \omega_{RL}$

Fig. 7 C

Estimated wheel speed — $\omega_{LE}, \omega_{RE}$
Resolver conversion value — $\omega_{Lds}, \omega_{Rds}$
Actual wheel speed — $\omega_{LL}, \omega_{RL}$

# EP 4 778 771 A1

## INTERNATIONAL SEARCH REPORT

International application No.

**PCT/JP2024/026848**

### A. CLASSIFICATION OF SUBJECT MATTER

**B60L 15/20**(2006.01)i; **B60L 9/18**(2006.01)i
FI: B60L15/20 S; B60L9/18 P

According to International Patent Classification (IPC) or to both national classification and IPC

### B. FIELDS SEARCHED

Minimum documentation searched (classification system followed by classification symbols)

B60L15/20; B60L9/18

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2017-163750 A (RICOH COMPANY, LTD.) 14 September 2017 (2017-09-14) paragraphs [0010]-[0012], [0077], drawings | 1-7 |
| A | US 2020/0132192 A1 (HYUNDAI MOTOR COMPANY) 30 April 2020 (2020-04-30) | 1-7 |

☐ Further documents are listed in the continuation of Box C.      ☑ See patent family annex.

\* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **01 October 2024** | **15 October 2024** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (July 2022)

21

INTERNATIONAL SEARCH REPORT
Information on patent family members

International application No.

**PCT/JP2024/026848**

| Patent document cited in search report | | | Publication date (day/month/year) | Patent family member(s) | Publication date (day/month/year) |
|---|---|---|---|---|---|
| JP | 2017-163750 | A | 14 September 2017 | (Family: none) | |
| US | 2020/0132192 | A1 | 30 April 2020 | KR 10-2020-0046277 A | |
| | | | | CN 111169481 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2019103249 A

### Non-patent literature cited in the description

- **HIROSHI FUJIMOTO** ; **TAKESHI TAKANO** ; **HIDE-TOSHI NOBUMOTO** ; **TOSHIMI OKAZAKI**. Driving Force Control Method Based on High Accuracy Slip Ratio Control. *Mazda Technical Review*, 2015 (32), 228-233
- **HIROSHI FUJIMOTO** ; **JUNYA AMADA** ; **TAKAYUKI MIYAJIMA**. Development and Control of Electric Vehicle with Variable Drive Unit System. *Proceedings of the 2013 JSAE Annual Spring Congress*, 2013 (8-13), 17-20
- **MASATAKA YOSHIMURA** ; **HIROSHI FUJIMOTO**. Driving Torque Control Method for Electric Vehicle with In-Wheel Motors. *Transactions of the Institute of Electrical Engineers of Japan. D*, 2011, vol. 131 (5), 721-728